(19) Europäisches Patentamt
European Patent Office
Office européen des brevets

(11) **EP 2 550 128 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(21) Anmeldenummer: **11709949.9**

(22) Anmeldetag: **23.03.2011**

(51) Int Cl.:
**B23K 26/00** (2014.01) **B23K 26/06** (2014.01)

(86) Internationale Anmeldenummer:
**PCT/EP2011/054483**

(87) Internationale Veröffentlichungsnummer:
**WO 2011/117314 (29.09.2011 Gazette 2011/39)**

(54) **VORRICHTUNG ZUR BEAUFSCHLAGUNG MIT LASERSTRAHLUNG**

DEVICE FOR IMPINGEMENT OF A LASER BEAM

DISPOSITIF POUR L'APPLICATION D'UN RAYONNEMENT LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2010 DE 102010020498**
**24.03.2010 DE 102010012467**
**24.03.2010 DE 102010012459**

(43) Veröffentlichungstag der Anmeldung:
**30.01.2013 Patentblatt 2013/05**

(73) Patentinhaber: **LIMO Patentverwaltung GmbH & Co. KG**
**44319 Dortmund (DE)**

(72) Erfinder:
• **LISSOTSCHENKO, Vitalij**
**58730 Fröndenberg (DE)**
• **MIKHAILOV, Aleksei**
**44319 Dortmund (DE)**
• **JEREMIN, Nikolai**
**48163 Münster (DE)**
• **KOLOTUSHKIN, Yury**
**199155 St. Petersburg (RU)**

(74) Vertreter: **Basfeld, Rainer**
**Fritz Patent- und Rechtsanwälte**
**Partnerschaft mbB**
**Postfach 1580**
**59705 Arnsberg (DE)**

(56) Entgegenhaltungen:
WO-A1-02/48059         WO-A1-2004/020141
JP-A- 10 244 386        US-A1- 2004 241 922
US-A1- 2006 091 120     US-A1- 2008 290 077

**Beschreibung**

Die vorliegende Erfindung betrifft eine Vorrichtung zur Beaufschlagung eines zumindest teilweise reflektierenden oder transparenten Bereichs eines in einem Arbeitsbereich angeordneten Werkstücks mit Laserstrahlung gemäß dem Oberbegriff des Anspruchs 1 (siehe die US-A-2004/0241922).

Definitionen: In Ausbreitungsrichtung der Laserstrahlung meint mittlere Ausbreitungsrichtung der Laserstrahlung, insbesondere wenn diese keine ebene Welle ist oder zumindest teilweise divergent ist. Mit Laserstrahl, Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil oder einem Top-Hat-Profil, der keinen infinitesimal kleinen, sondern einen ausgedehnten Strahlquerschnitt aufweist. Mit Brennweite einer Linse oder Zylinderlinse ist die Brennweite der Linse im Vakuum (Brechungsindex $n_v = 1$) gemeint.

Es soll an dieser Stelle weiterhin angemerkt werden, dass der Brechungsindex in einem Medium - wie beispielsweise Luft oder Glas - abhängig von der Wellenlänge des zu brechenden Lichtes ist. Daher wird der Brechungsindex im Folgenden mit $n(\lambda)$ bezeichnet. Eine Einführung in die Theorie derartiger Abhängigkeiten findet sich beispielsweise in Born, Max und Wolf, Emil, "Principles of Optics", 7. Auflage, Cambridge University Press, Cambridge 1999, Seiten 97 ff.

Vorrichtungen zur Beaufschlagung mit Laserstrahlung der eingangs genannten Art sind hinlänglich bekannt. Beispielsweise wird mittels einer fokussierenden Optik die Laserstrahlung in einen Arbeitsbereich fokussiert, in dem beispielsweise eine Schicht eines Substrats mit der Laserstrahlung beaufschlagt werden soll, um eine chemische Reaktion oder eine Strukturumwandlung oder dergleichen zu bewirken.

Wenn jedoch diese Schicht nur eine geringe optische Dichte bei der Wellenlänge der verwendeten Laserstrahlung aufweist, sind die aus dem Stand der Technik bekannten Vorrichtungen wenig effektiv, weil in diesem Fall nur ein kleiner Teil der Laserstrahlung von der Schicht absorbiert wird.

Eine Vorrichtung zur Abbildung einer linienförmigen Lichtverteilung der eingangs Art ist beispielsweise aus der DE 199 36 230 A1 bekannt. Dort sind in Ausbreitungsrichtung des Lichts einer abzubildenden Lichtverteilung vier Arrays von Zylinderlinsen hintereinander auf zwei Substraten angeordnet, wobei auf jedem der Substrate sowohl die Eintrittsfläche, als auch die Austrittsfläche mit einem der Arrays versehen ist. Sämtliche Zylinderlinsen sind gleich gestaltet und weisen die gleiche Brennweite auf. Die Dicke der Substrate und damit der Abstand zwischen dem eintrittsseitigen und dem austrittsseitigem Array entspricht jeweils der doppelten Brennweite der Zylinderlinsen in dem Material der Substrate beziehungsweise dem Produkt aus der doppelten Brennweite und dem Brechungsindex des Materials. Auf diese Weise wirken die hintereinander angeordneten Zylinderlinsen als doppeltes Teleskop, so dass in der doppelten Brennweite der Zylinderlinsen vor den Substraten angeordnete Lichtverteilungen 1:1 in eine Ebene abgebildet werden, die in der Entfernung der doppelten Brennweite hinter den Substraten angeordnet ist.

Als nachteilig bei einer derartigen Anordnung erweist sich die Tatsache, dass einerseits nur bei Anordnung der abzubildenden Lichtverteilung in der doppelten Brennweite der Zylinderlinsen vor den Substraten eine Größen erhaltende Abbildung möglich ist. Weiterhin können unter einem großen Winkel zur Normalen einfallende Lichtstrahlen nicht sinnvoll zu der Abbildung beitragen. Insbesondere kann eine linienförmige Lichtverteilung, die in Linienlängsrichtung sehr ausgedehnt ist, beispielsweise mehr als 1 m lang ist, mit einer derartigen aus dem Stand der Technik bekannten Vorrichtung nicht befriedigend abgebildet werden.

Das der vorliegenden Erfindung zugrunde liegende Problem ist die Schaffung einer Vorrichtung zur Beaufschlagung mit Laserstrahlung der eingangs genannten Art, die effektiver ist. Weiterhin liegt der vorliegenden Erfindung das Problem zugrunde, eine Vorrichtung zur Abbildung einer linienförmigen Lichtverteilung der eingangs genannten Art zu schaffen, die effektiver und universeller, insbesondere für die Abbildung von in Linienlängsrichtung sehr ausgedehnten Lichtverteilungen, eingesetzt werden kann. Weiterhin soll eine Laservorrichtung mit einer derartigen Vorrichtung angegeben werden. Weiterhin soll ein Verfahren zur Herstellung einer derartigen Vorrichtung angegeben werden.

Dies wird erfindungsgemäß hinsichtlich der Vorrichtung zur Beaufschlagung mit Laserstrahlung durch eine Vorrichtung der eingangs genannten Art mit den kennzeichnenden Merkmalen des Anspruchs 1. Die Unteransprüche betreffen bevorzugte Ausgestaltungen der Erfindung.

Gemäß Anspruch 1 ist vorgesehen, dass die Optikmittel mindestens einen Spiegel umfassen, der einen in dem Arbeitsbereich reflektierten Teil der Laserstrahlung oder einen durch den Arbeitsbereich hindurchgetretenen Teil der Laserstrahlung derart reflektieren kann, dass dieser Teil der Laserstrahlung zumindest teilweise zu dem Arbeitsbereich zurück geführt wird. Dadurch wird die Effektivität der Vorrichtung erhöht, weil ein bereits einmal zur Beaufschlagung verwendeter Teil der Laserstrahlung wieder in den Arbeitsbereich zurück überführt wird und teilweise nochmals absorbiert werden kann.

Dazu kann vorgesehen sein, dass mindestens ein erster Spiegel auf der von der Laserlichtquelle abgewandten Seite des Arbeitsbereichs angeordnet ist, der er einen durch den Arbeitsbereich hindurchgetretenen Teil der Laserstrahlung derart reflektieren kann, dass dieser Teil der Laserstrahlung zumindest teilweise zu dem Arbeitsbereich zurück geführt wird.

Weiterhin kann vorgesehen sein, dass die Vorrichtung zusätzlich zu dem mindesten einen ersten Spiegel mindestens einen zweiten Spiegel auf der der Laserlichtquelle zugewandten Seite des Arbeitsbereichs umfasst, der einen Teil des von dem ersten Spiegel reflektierten und zumindest teilweise durch den Arbeitsbereich hindurchgetretenen Teils der Laserstrahlung derart reflektieren kann, dass dieser Teil der Laserstrahlung zumindest teilweise zu dem Arbeitsbereich zurück geführt wird. Auf diese Weise kann die Laserstrahlung mehrfach in den Arbeitsbereich zurück geführt werden.

Alternativ kann vorgesehen sein, dass der oder die Spiegel lediglich auf der der Laserlichtquelle zugewandten Seite des Arbeitsbereichs angeordnet sind, wobei der oder die Spiegel einen in dem Arbeitsbereich reflektierten Teil der Laserstrahlung derart reflektieren kann oder können, dass dieser Teil der Laserstrahlung zumindest teilweise zu dem Arbeitsbereich zurück geführt wird. Diese Ausführungsform bietet sich insbesondere bei zu beaufschlagenden Materialien an, die eine geringe oder gar keine Transmission bei der verwendeten Laserwellenlänge zulassen.

Es kann vorgesehen sein, dass der mindestens eine Spiegel eine äußere und/oder eine innere spiegelnde Oberfläche aufweist.

Beispielsweise können beschichtete Außenflächen eines planen oder gekrümmten Körpers und/oder reflektierende innere Flächen in einem Prisma oder dergleichen als Spiegel verwendet werden. Insbesondere können zwei unter einem Winkel von 90° aneinander stoßenden Spiegel durch innere Reflexionen in einem Prisma realisiert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1    eine schematische Seitenansicht einer ersten Ausführungsform einer Vorrichtung zur Beaufschlagung mit Laserstrahlung, die keine Ausführungsform der Erfindung darstellt;

Fig. 2    eine schematische Seitenansicht einer Ausführungsform einer erfindungsgemäßen Vorrichtung zur Beaufschlagung mit Laserstrahlung;

Fig. 3    eine Detailansicht gemäß dem Pfeil III in Fig. 2;

Fig. 4    eine schematische Seitenansicht einer Vorrichtung zur Beaufschlagung mit Laserstrahlung, die keine Ausführungsform der Erfindung darstellt;

Fig. 5    eine schematische Seitenansicht einer Vorrichtung zur Beaufschlagung mit Laserstrahlung, die keine Ausführungsform der Erfindung darstellt;

Fig. 6    eine schematische Seitenansicht einer Vorrichtung zur Beaufschlagung mit Laserstrahlung, die keine Ausführungsform der Erfindung darstellt;

Fig. 7    eine schematische Seitenansicht einer Vorrichtung zur Abbildung einer linienförmigen Lichtverteilung, die keine Ausführungsform der Erfindung darstellt;

Fig. 8    eine schematische Seitenansicht einer zweiten Vorrichtung zur Abbildung einer linienförmigen Lichtverteilung, die keine Ausführungsform der Erfindung darstellt.

In den Figuren sind gleiche oder funktional gleiche Teile oder Strahlen mit gleichen Bezugszeichen versehen. Weiterhin ist zur besseren Orientierung in einigen der Figuren ein kartesisches Koordinatensystem eingezeichnet.

Von einer nicht abgebildeten Laserlichtquelle geht eine Laserstrahlung 1 aus, die im abgebildeten Ausführungsbeispiel eine kollimierte Laserstrahlung 1 ist. Mit der Laserstrahlung 1 soll in einer Arbeitsebene 2 beispielsweise eine nicht abgebildete Schicht eines Substrats beaufschlagt werden. Diese Schicht weist beispielsweise eine geringe optische Dichte bei der Wellenlänge der verwendeten Laserstrahlung 1 auf. Das bedeutet, dass bei einem Durchgang der Laserstrahlung 1 durch die Schicht nur ein kleiner Teil der Laserstrahlung 1 von der Schicht absorbiert wird.

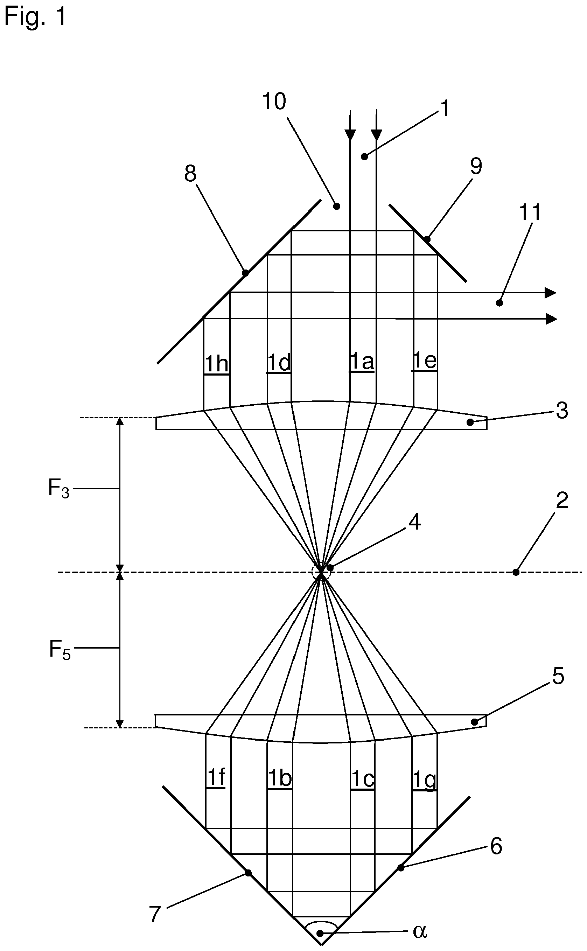

Die in Fig. 1 abgebildete Vorrichtung zur Beaufschlagung mit Laserstrahlung umfasst eine erste Linse 3 auf derjenigen Seite der Arbeitsebene 2, die der Laserlichtquelle zugewandt ist. Die erste Linse 3 weist eine positive Brechkraft auf und fokussiert die Laserstrahlung 1 in einen Arbeitsbereich 4, der in der Arbeitsebene 2 angeordnet ist. Dazu ist die erste Linse 3 in einem Abstand von der Arbeitsebene 2 angeordnet, der der Brennweite $F_3$ der ersten Linse 3 entspricht. Die erste Linse 3 ist beispielsweise als plankonvexe Linse ausgebildet.

In dem Arbeitsbereich 4 wird ein Teil der Laserstrahlung 1 von der nicht abgebildeten Schicht des Substrats absorbiert.

Auf der von der Laserlichtquelle abgewandten Seite der Arbeitsebene 2 ist eine zweite Linse 5 angeordnet, die ebenfalls eine positive Brechkraft aufweist. Die zweite Linse 5 ist ebenfalls in einem Abstand von der Arbeitsebene 2 angeordnet, der der Brennweite $F_5$ der zweiten Linse 5 entspricht. Die Brennweiten $F_3$ und $F_5$ sind gleich groß. Auch die zweite Linse 5 ist beispielsweise als plankonvexe Linse ausgebildet.

Auf der von der Arbeitsebene 2 abgewandten Seite der zweiten Linse 5 sind ein erster Spiegel 6 und ein zweiter Spiegel 7 angeordnet, deren reflektierende Flächen einen Winkel $\alpha$ von 90° miteinander einschließen und insbesondere unter diesem Winkel $\alpha$ aneinander anschließen. Dabei sind die Spiegel 6, 7 jeweils unter einem Winkel von 45° zur Arbeitsebene 2 beziehungsweise zur Laserstrahlung 1 ausgerichtet.

Weiterhin sind auf der von der Arbeitsebene 2 abgewandten Seite der ersten Linse 3 ein dritter Spiegel 8 und ein vierter Spiegel 9 angeordnet, deren reflektierende Flächen ebenfalls einen Winkel von 90° miteinander einschließen. Dabei sind auch die Spiegel 8, 9 jeweils unter einem Winkel von 45° zur Arbeitsebene 2 beziehungsweise zur Laserstrahlung 1 ausgerichtet. Allerdings schließen der dritte und der vierte Spiegel 8, 9 nicht aneinander an, sondern weisen zwischen sich einen Raum 10 auf, durch den die Laserstrahlung 1 in die Vorrichtung eintreten kann. Weiterhin ist der vierte Spiegel 9 vergleichsweise kurz, so dass auf der der Arbeitsebene 2 zugewandten Seite des vierten Spiegels 9 Laserstrahlung 11 an diesem vorbei die Vorrichtung verlassen kann. Der vierte Spiegel 9 ist also unsymmetrisch in der Vorrichtung angeordnet.

Aus Fig. 1 ist ersichtlich, dass die einfallende Laserstrahlung 1 von den Linsen 3, 5 und den Spiegeln 6, 7, 8, 9 so abgelenkt wird, dass sie insgesamt viermal durch den Arbeitsbereich 4 hindurch tritt. Aufgrund des viermaligen Hindurchtritts kann von der nicht abgebildeten Schicht des Substrats eine vergleichsweise große Menge der Laserstrahlung absorbiert werden. Dabei nimmt die Laserstrahlung in der Vorrichtung zweimal einen Verlauf, der einer "8" entspricht. Die Laserstrahlung wird im Inneren der Vorrichtung in der Reihenfolge ihres Auftretens mit den Bezugszeichen 1a, 1b, 1c, 1d, 1e, 1f, 1g und 1h bezeichnet.

Dabei wird die Laserstrahlung 1 nach Eintritt in die Vorrichtung als Laserstrahlung 1a bezeichnet. Die Laserstrahlung 1a wird nach Hindurchtritt durch die Linsen 3, 5 und den Arbeitsbereich 4 als Laserstrahlung 1b bezeichnet. Die Laserstrahlung 1b wird nach Reflexion an dem ersten und dem zweiten Spiegel 6, 7 als Laserstrahlung 1c bezeichnet. Die Laserstrahlung 1c wird nach Hindurchtritt durch die Linsen 3, 5 und den Arbeitsbereich 4 als Laserstrahlung 1d bezeichnet. Die Laserstrahlung 1d wird nach Reflexion an dem dritten und dem vierten Spiegel 8, 9 als Laserstrahlung 1e bezeichnet. Die Laserstrahlung 1e wird nach Hindurchtritt durch die Linsen 3, 5 und den Arbeitsbereich 4 als Laserstrahlung 1f bezeichnet. Die Laserstrahlung 1f wird nach Reflexion an dem ersten und dem zweiten Spiegel 6, 7 als Laserstrahlung 1g bezeichnet. Die Laserstrahlung 1g wird nach Hindurchtritt durch die Linsen 3, 5 und den Arbeitsbereich 4 als Laserstrahlung 1h bezeichnet.

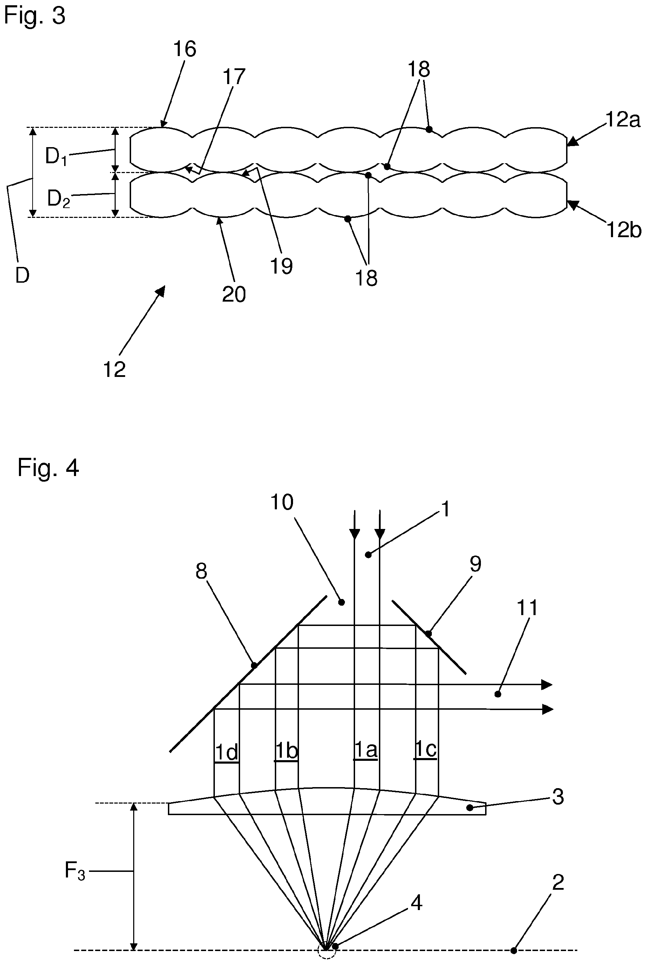

Die Laserstrahlung 1h tritt nach Reflexion an dem dritten Spiegel 8 als Laserstrahlung 11 aus der Vorrichtung aus. Die Laserstrahlung 11 verlässt die Vorrichtung nach rechts in Fig. 1 und damit unter einem Winkel von 90° zu der einfallenden Laserstrahlung 1. Auf diese Weise wird vermieden, dass ein Teil der aus der Vorrichtung austretenden Laserstrahlung 11 zu der nicht abgebildeten Laserlichtquelle zurück verläuft. Eine Ausführungsform der Erfindung unterscheidet sich von der Vorrichtung der Figur 1 dadurch, dass die Vorrichtung zusätzlich eine Mehrzahl von Linsenarraymitteln 12, 13, 14, 15 umfasst. Die Linsenarraymitteln 12, 13, 14, 15 sind identisch aufgebaut, unterscheiden sich jedoch durch ihre Lage und Ausrichtung voneinander. In Fig. 3 ist beispielhaft das Linsenarraymittel 12 dargestellt.

Das Linsenarraymittel 12 umfasst wie jedes der anderen Linsenarraymittel 13, 14, 15 zwei Substrate 12a, 12b, die insbesondere aus dem gleichen Material gefertigt sind und den gleichen Brechungsindex aufweisen. Das erste Substrat 12a weist auf einander gegenüberliegenden Seiten ein erstes Array 16 und ein zweites Array 17 von Zylinderlinsen 18 auf. Das zweite Substrat 12b weist auf einander gegenüberliegenden Seiten ein drittes Array 19 und ein viertes Array 20 von Zylinderlinsen 18 auf. Insbesondere liegt das zweite Array 17, das auf dem ersten Substrat 12a ausgebildet ist, an dem dritten Array 19 an, das auf dem zweiten Substrat 12b ausgebildet ist.

Die Zylinderlinsen 18 sind so ausgerichtet, dass sich ihre Zylinderachsen in die Zeichenebene der Fig. 3 hinein erstrecken. Die Brennweiten f der Zylinderlinsen 18 sind sämtlich gleich. Dabei entspricht der Abstand $D_1$ von den Scheitellinien der Zylinderlinsen 18 des ersten Arrays 16 zu den Scheitellinien der Zylinderlinsen 18 des zweiten Arrays 17 dem Produkt aus der Brennweite f und dem Brechungsindex $n(\lambda)$ des ersten Substrats 12a bei der Wellenlänge $\lambda$ der Laserstrahlung 1. Weiterhin entspricht der Abstand $D_2$ von den Scheitellinien der Zylinderlinsen 18 des dritten Arrays 19 zu den Scheitellinien der Zylinderlinsen 18 des vierten Arrays 20 ebenfalls dem Produkt aus der Brennweite f und dem Brechungsindex $n(\lambda)$ des zweiten Substrats 12b bei der Wellenlänge $\lambda$ der Laserstrahlung 1.

Damit ist auf jedem Substrat 12a, 12b ein Array von dicken Fourierlinsen gebildet, nämlich Linsen, bei denen die beiden als Zylinderlinsen 18 dienenden brechenden Flächen genau im Abstand $D_1$, $D_2$ des Produkts aus Brennweite f und Brechungsindex $n(\lambda)$ angeordnet sind.

Weil bei dem abgebildeten Ausführungsbeispiel die Brennweiten f sämtlicher Zylinderlinsen 18 gleich sind und auch die Brechungsindices $n(\lambda)$ beider Substrate 12a, 12b gleich sind, sind die Abstände $D_1$ und $D_2$ ebenfalls gleich. Weil insbesondere auch die Scheitellinien der Zylinderlinsen 18 des zweiten Arrays 17 an den Scheitellinien der Zylinderlinsen 18 des dritten Arrays 19 anliegen, ergibt sich als Gesamtdicke D der Vorrichtung (siehe Fig. 3):

$$D = D_1 + D_2 = 2 \cdot f \cdot n(\lambda).$$

Jeweils vier in Z-Richtung hintereinander angeordnete Zylinderlinsen 18 auf dem ersten, dem zweiten, dem dritten und dem vierten Array 16, 17, 19, 20 stellen somit einen als Teleskop wirkenden Kanal dar. Die Vergrößerung dieser einzelnen Teleskope entspricht im abgebildeten Ausführungsbeispiel -1. Dabei dienen die mittleren Zylinderlinsen 18, die in dem zweiten und dem dritten Array 17, 19 angeordnet sind, als zusätzliche Feldlinsen, die eine Abbildung von Licht zulassen, das unter großen Winkeln zur Normalen auf die Linsenarraymittel 12 auftrifft. Auf die mittleren Arrays 17, 19 kann alternativ verzichtet werden.

Bei einem mehrmaligen Durchgang der Laserstrahlung durch den Arbeitsbereich 4 einer Vorrichtung ohne Linsenarraymittel, wie sie in Fig. 1 abgebildet ist, wird die Rayleighlänge des Fokus der Laserstrahlung im Arbeitsbereich 4 immer kleiner. Dies führt dazu, dass der Fokus unter Umständen relativ zu der Arbeitsebene 2 nach oben oder unten verschoben ist und damit die Effektivität der Absorption durch die nicht abgebildete Schicht des Substrats abnimmt.

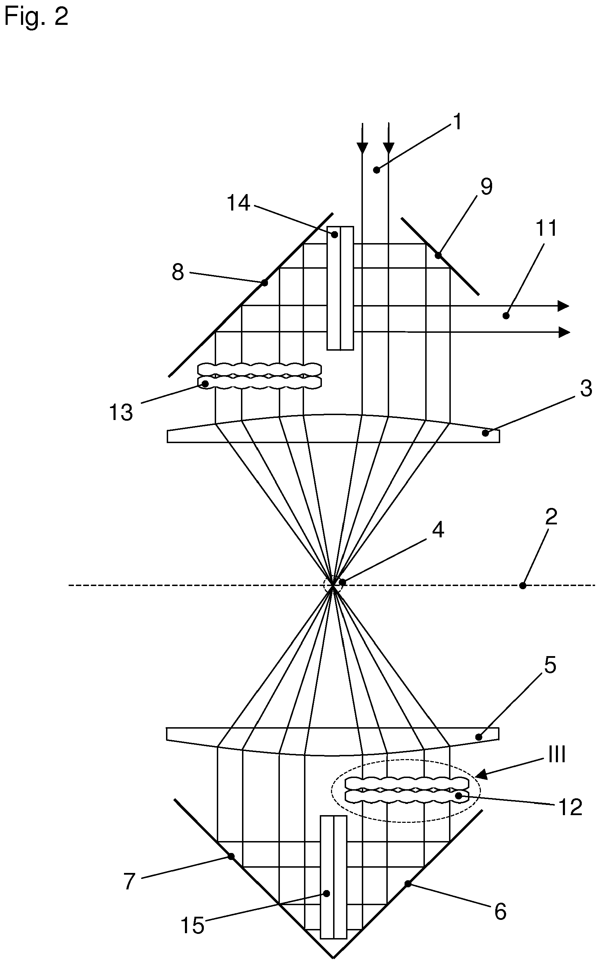

Bei einer Vorrichtung zur Beaufschlagung mit Laserstrahlung gemäß Fig. 2 können die Linsenarraymittel 12, 13, 14, 15 die Divergenz der durch sie hindurch tretenden Laserstrahlung invertieren. Dies führt dazu, dass die bei einer Vorrichtung gemäß Fig. 1 beobachtbaren Rayleighlängen auch bei einer Verschiebung des Substrates aus der Arbeitsebene 2 keine Veränderung erfahren.

Die Linsenarraymittel 12, 13 sind so ausgerichtet, dass sich die Zylinderachsen ihrer Zylinderlinsen 18 in die Zeichenebene der Fig. 2 hinein erstrecken. Die Linsenarraymittel 14, 15 dagegen sind so ausgerichtet, dass sich die Zylinderachsen ihrer Zylinderlinsen in der Zeichenebene der Fig. 2 erstrecken. Die Linsenarraymittel 12, 13 einerseits und die Linsenarraymittel 14, 15 wirken somit auf unterschiedliche Achsen des Querschnitts der Laserstrahlung.

Die Vorrichtung gemäß Fig. 4 unterscheidet sich von derjenigen gemäß Fig. 1 dadurch, dass die auf der von der Laserlichtquelle abgewandten Seite der Arbeitsebene 2 angeordnete zweite Linse 5 und die auf der von der Laserlichtquelle abgewandten Seite der Arbeitsebene 2 angeordneten Spiegel 6, 7 nicht vorhanden sind. Dadurch eignet sich die Vorrichtung für die Beaufschlagung von Materialien mit Laserstrahlung, die eine zumindest teilweise reflektierende Oberfläche aufweisen.

Aus Fig. 4 ist ersichtlich, dass die einfallende Laserstrahlung 1 von der Linse 3 und den Spiegeln 8, 9 so abgelenkt wird, dass sie insgesamt zweimal durch den Arbeitsbereich 4 hindurch tritt. Aufgrund des zweimaligen Hindurchtritts kann von der nicht abgebildeten Schicht des Substrats ebenfalls eine größere Menge der Laserstrahlung absorbiert werden als bei einer einmaligen Beaufschlagung. Dabei nimmt die Laserstrahlung in der Vorrichtung zweimal einen Verlauf, der einem deformierten "O" entspricht. Die Laserstrahlung wird im Inneren der Vorrichtung in der Reihenfolge ihres Auftretens mit den Bezugszeichen 1a, 1b, 1c, 1d bezeichnet.

Dabei wird die Laserstrahlung 1 nach Eintritt in die Vorrichtung als Laserstrahlung 1a bezeichnet. Die Laserstrahlung 1a wird nach Reflexion an der Arbeitsebene 2 als Laserstrahlung 1b bezeichnet. Die Laserstrahlung 1b wird nach Reflexion an dem dritten und dem vierten Spiegel 8, 9 als Laserstrahlung 1c bezeichnet. Die Laserstrahlung 1c wird nach Reflexion an der Arbeitsebene 2 als Laserstrahlung 1d bezeichnet.

Die Laserstrahlung 1d tritt nach Reflexion an dem dritten Spiegel 8 als Laserstrahlung 11 aus der Vorrichtung aus. Die Laserstrahlung 11 verlässt die Vorrichtung nach rechts in Fig. 4 und damit unter einem Winkel von 90° zu der einfallenden Laserstrahlung 1. Auf diese Weise wird vermieden, dass ein Teil der aus der Vorrichtung austretenden Laserstrahlung 11 zu der nicht abgebildeten Laserlichtquelle zurück verläuft.

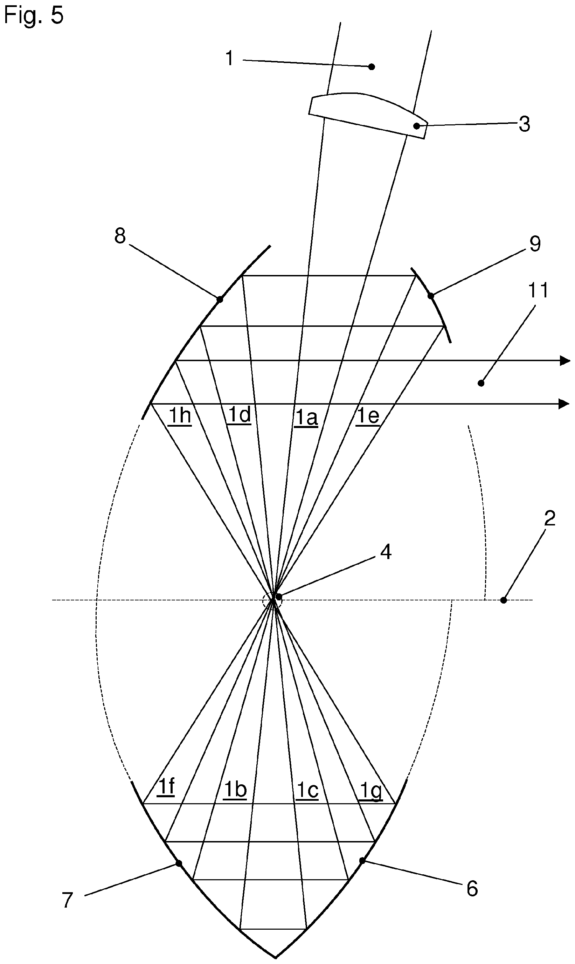

Die Vorrichtung gemäß Fig. 5 weist im Gegensatz zu den Vorrichtungen gemäß den Fig. 1, Fig. 2 und Fig. 4 gekrümmte Spiegel 6, 7, 8, 9 anstelle der planen Spiegel 6, 7, 8, 9 auf. Die Spiegel 6, 7, 8, 9 können beispielsweise eine parabolische oder eine elliptische Form aufweisen. Aus diesem Grund kann auf die Linsen im Inneren der Vorrichtung verzichtet werden. Es ist lediglich eine erste Linse 3 vorgesehen, die die einfallende Laserstrahlung 1 in den Arbeitsbereich 4 fokussiert.

Nach der einmaligen Fokussierung muss die Laserstrahlung nicht mehr durch die erste Linse 3 hindurchtreten, weil die gekrümmten Spiegel 6, 7, 8, 9 die erneute Fokussierung der Laserstrahlung in den Arbeitsbereich 4 gewährleisten. Durch diese Gestaltung wird die Anzahl der Brechungen stark vermindert, so dass auch entsprechende Verluste reduziert werden.

Auch bei dieser Vorrichtung schließen der dritte und der vierte Spiegel 8, 9 nicht aneinander an, sondern weisen zwischen sich einen Raum 10 auf, durch den die Laserstrahlung 1 in die Vorrichtung eintreten kann. Weiterhin ist der vierte Spiegel 9 vergleichsweise kurz, so dass auf der der Arbeitsebene 2 zugewandten Seite des vierten Spiegels 9 Laserstrahlung 11 an diesem vorbei die Vorrichtung verlassen kann. Der vierte Spiegel 9 ist hier also ebenfalls unsymmetrisch in der Vorrichtung angeordnet.

Die Laserstrahlung im Inneren der Vorrichtung ist mit den gleichen Bezugszeichen 1a, 1b, 1c, 1d, 1e, 1f, 1g und 1h versehen wie in den Fig. 1 und Fig. 2 und nimmt auch im Wesentlichen den gleichen Verlauf, nämlich zweimal einen Verlauf, der einer "8" entspricht.

Es besteht durchaus auch die Möglichkeit, bei einer Vorrichtung zur Beaufschlagung mit Laserstrahlung gemäß Fig. 5 Linsenarraymittel vorzusehen, wie dies bei der Ausführungsform gemäß Fig. 2 der Fall. Weiterhin besteht durchaus auch die Möglichkeit, die Konstruktion gemäß Fig. 5 nur einseitig auszuführen, so dass eine für reflektierende Medien geeignete Vorrichtung entsteht, die derjenigen gemäß Fig. 4 ähnelt.

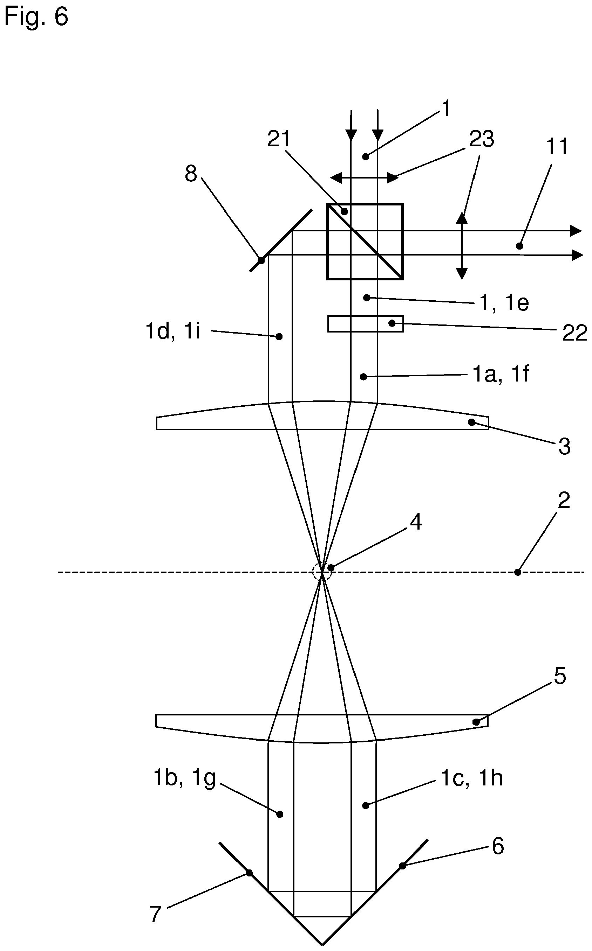

Die Vorrichtung gemäß Fig. 6 unterscheidet sich von der Vorrichtung gemäß Fig. 1 dadurch, dass anstelle des vierten Spiegels 9 ein als Polarisationswürfel ausgebildeter polarisationsselektiver Strahlteiler 21 und ein als Halbwellenlängenplättchen ausgebildeter Polarisationsdreher 22 vorgesehen sind.

Durch den Pfeil 23 ist angedeutet, dass die in die Vorrichtung eintretende Laserstrahlung 1 eine in der Zeichenebene der Fig. 6 liegende Polarisationsrichtung aufweist. Der polarisationsselektive Strahlteiler 21 und der Polarisationsdreher 22 sind etwa auf Höhe des dritten Spiegels 8 vor der ersten Linse 3 angeordnet, so dass die einfallende Laserstrahlung 1 vor dem Auftreffen auf die erste Linse 3 durch den polarisationsselektiven Strahlteiler 21 und den Polarisationsdreher 22 hindurchtritt. Dabei ist der polarisationsselektive Strahlteiler 21 so ausgebildet und angeordnet, dass von oben in Fig. 6 auf ihn auftreffendes Licht, das eine in der Zeichenebene verlaufende Polarisationsrichtung aufweist, ungehindert durch den Strahlteiler 21 nach unten in Fig. 6 hindurch tritt.

Durch den sich daran anschließenden Polarisationsdreher 22 wird die Polarisationsrichtung so gedreht, dass sie senkrecht zur Zeichenebene der Fig. 6 ausgerichtet ist.

In Fig. 6 wird die Laserstrahlung 1 nach Hindurchtritt durch den Polarisationsdreher 22 als Laserstrahlung 1a bezeichnet. Die Laserstrahlung 1a wird nach Hindurchtritt durch die Linsen 3, 5 und den Arbeitsbereich 4 als Laserstrahlung 1b bezeichnet. Die Laserstrahlung 1b wird nach Reflexion an dem ersten und dem zweiten Spiegel 6, 7 als Laserstrahlung 1c bezeichnet. Die Laserstrahlung 1c wird nach Hindurchtritt durch die Linsen 3, 5 und den Arbeitsbereich 4 als Laserstrahlung 1d bezeichnet.

Weil die Laserstrahlung 1d eine senkrecht zur Zeichenebene der Fig. 6 ausgerichtete Polarisation aufweist, wird sie von dem polarisationsselektiven Strahlteiler 21 nach unten in Fig. 6 reflektiert. Die Laserstrahlung wird nach Reflexion an dem dritten Spiegel 8 und dem polarisationsselektiven Strahlteiler 21 als Laserstrahlung 1e bezeichnet. Daran anschließend tritt die Laserstrahlung 1e durch den Polarisationsdreher 22 hindurch und wird nach dem Hindurchtritt als Laserstrahlung 1f bezeichnet. Der Hindurchtritt durch den Polarisationsdreher 22 bewirkt, dass die Laserstrahlung 1f eine in der Zeichenebene der Fig. 6 liegende Polarisationsrichtung aufweist.

Die Laserstrahlung 1f wird nach Hindurchtritt durch die Linsen 3, 5 und den Arbeitsbereich 4 als Laserstrahlung 1g bezeichnet. Die Laserstrahlung 1g wird nach Reflexion an dem ersten und dem zweiten Spiegel 6, 7 als Laserstrahlung 1h bezeichnet. Die Laserstrahlung 1h wird nach Hindurchtritt durch die Linsen 3, 5 und den Arbeitsbereich 4 als Laserstrahlung 1i bezeichnet.

Die Laserstrahlung 1i trifft nach Reflexion an dem dritten Spiegel 8 auf den polarisationsselektiven Strahlteiler 21 und wird von diesem ungehindert nach rechts in Fig. 6 hindurch gelassen, weil ihre Polarisationsrichtung in der Zeichenebene der Fig. 6 liegt.

Sie tritt als Laserstrahlung 11 aus der Vorrichtung aus, wobei die in der Zeichenebene liegende Polarisationsrichtung durch den Pfeil 23 angedeutet wird. Die Laserstrahlung 11 verlässt die Vorrichtung nach rechts in Fig. 1 und damit unter einem Winkel von 90° zu der einfallenden Laserstrahlung 1. Auf diese Weise wird vermieden, dass ein Teil der aus der Vorrichtung austretenden Laserstrahlung 11 zu der nicht abgebildeten Laserlichtquelle zurück verläuft.

Auch bei der Vorrichtung gemäß Fig. 6 tritt die Laserstrahlung somit insgesamt viermal durch den Arbeitsbereich 4 hindurch und nimmt dabei in der Vorrichtung zweimal einen Verlauf, der einer "8" entspricht.

Es besteht durchaus auch die Möglichkeit, bei einer Vorrichtung gemäß Fig. 6 Linsenarraymittel vorzusehen, wie dies bei der Ausführungsform gemäß Fig. 2 der Fall. Weiterhin besteht durchaus auch die Möglichkeit, die konstruktion gemäß Fig. 6 nur einseitig auszuführen, so dass eine für reflektierende Medien geeignete Vorrichtung entsteht, die derjenigen gemäß Fig. 4 ähnelt.

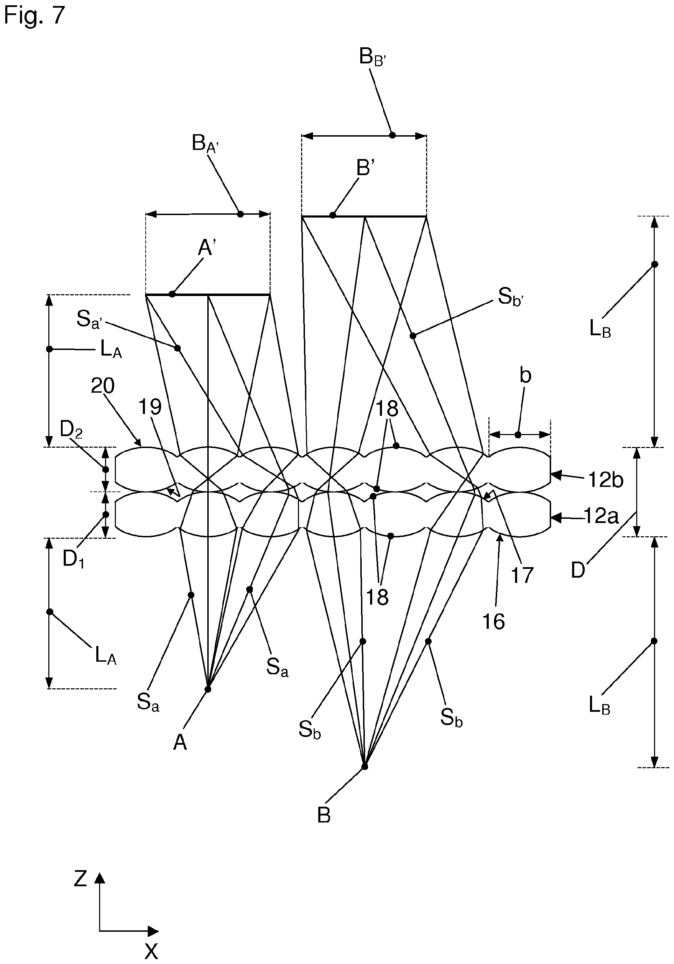

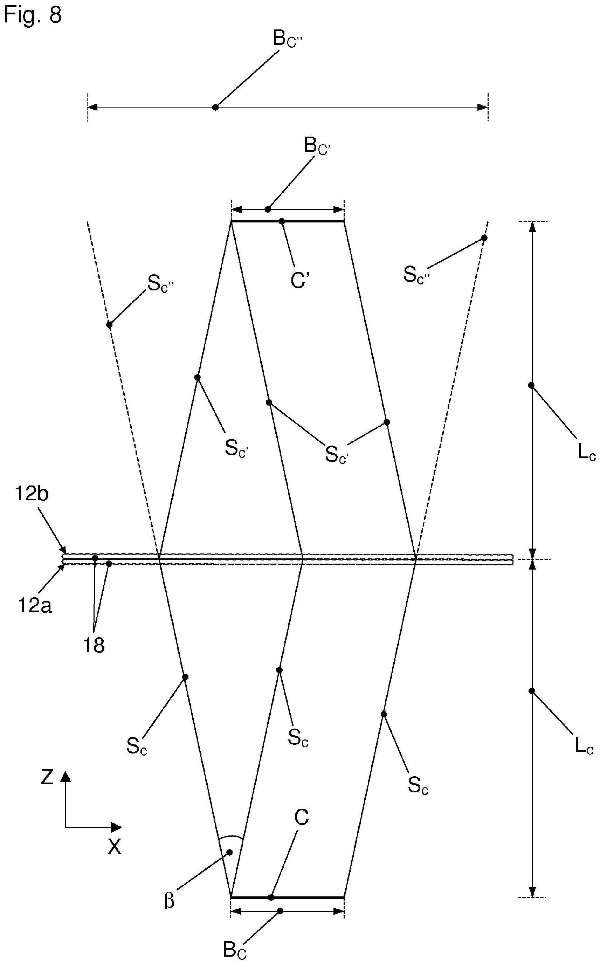

Es zeigt sich, dass das unter Bezugnahme auf Fig. 3 detailliert beschriebene Linsenarraymittel 12 weiterhin dazu genutzt werden kann, eine linienförmige Lichtverteilung abzubilden. Daher kann die aus Fig. 7 und Fig. 8 ersichtliche Vorrichtung zur Abbildung einer linienförmigen Lichtverteilung insbesondere dem Linsenarraymittel 12 gemäß Fig. 3 entsprechen.

Die Vorrichtung gemäß Fig. 7 und Fig. 8 umfasst allgemein ein erstes Substrat 12a und ein zweites Substrat 12b. Das erste Substrat 12a weist einen Brechungsindex $n_1(\lambda)$ auf, der zumindest abschnittsweise und zumindest bei einer Wellenlänge $\lambda$ gleich dem Brechungsindex $n_2(\lambda)$ des zweiten Substrats ist. Insbesondere bestehen die beiden Substrate 12a, 12b zumindest abschnittsweise aus dem gleichen Material.

Das erste Substrat 12a weist auf in Z-Richtung einander gegenüberliegenden Seiten ein erstes Array 16 und ein zweites Array 17 von Zylinderlinsen 18 auf. Sowohl bei dem ersten Array 16, als auch bei dem zweiten Array 17 sind die Zylinderlinsen 18 jeweils in X-Richtung nebeneinander angeordnet und so ausgerichtet, dass sich ihre Zylinderachse jeweils in Y-Richtung beziehungsweise in die Zeichenebene der Fig. 7 und der Fig. 8 hinein erstreckt.

Das zweite Substrat 12b weist auf in Z-Richtung einander gegenüberliegenden Seiten ein drittes Array 19 und ein viertes Array 20 von Zylinderlinsen 18 auf. Sowohl bei dem dritten Array 19, als auch bei dem vierten Array 20 sind die Zylinderlinsen 18 jeweils in X-Richtung nebeneinander angeordnet und so ausgerichtet, dass sich ihre Zylinderachse jeweils in Y-Richtung beziehungsweise in die Zeichenebene der Fig. 7 und der Fig. 8 hinein erstreckt.

Die Zylinderlinsen 18 des ersten, des zweiten, des dritten und des vierten Arrays 16, 17, 19, 20 weisen jeweils die gleiche Breite b in X-Richtung auf (siehe Fig. 7).

Insbesondere liegen die Scheitellinien der Zylinderlinsen 18 des zweiten Arrays 17, das auf dem ersten Substrat 12a ausgebildet ist, an den Scheitellinien der Zylinderlinsen 18 des dritten Arrays 19 an, das auf dem zweiten Substrat 12b ausgebildet ist.

Die Zylinderlinsen 18 des ersten und des zweiten Arrays 16, 17 weisen sämtlich die gleiche Brennweite $F_1$ auf. Auch die Zylinderlinsen 18 des dritten und des vierten Arrays 19, 20 weisen sämtlich die gleiche Brennweite $F_2$ auf. Insbesondere ist die Brennweite $F_1$ der Zylinderlinsen 18 des ersten und des zweiten Arrays 16, 17 gleich der Brennweite $F_2$ der Zylinderlinsen 18 des dritten und des vierten Arrays 19, 20.

Dabei entspricht der Abstand $D_1$ von den Scheitellinien der Zylinderlinsen 18 des ersten Arrays 16 zu den Scheitellinien der Zylinderlinsen 18 des zweiten Arrays 17 dem Produkt aus der Brennweite $F_1$ und dem Brechungsindex $n_1(\lambda)$ des ersten Substrats 12a. Weiterhin entspricht der Abstand $D_2$ von den Scheitellinien der Zylinderlinsen 18 des dritten Arrays 19 zu den Scheitellinien der Zylinderlinsen 18 des vierten Arrays 20 dem Produkt aus der Brennweite $F_2$ und dem Brechungsindex $n_2(\lambda)$ des zweiten Substrats 12b.

Damit ist auf jedem Substrat 12a, 12b ein Array von dicken Fourierlinsen gebildet, nämlich Linsen, bei denen die beiden als Zylinderlinsen 18 dienenden brechenden Flächen genau im Abstand $D_1$, $D_2$ des Produkts aus Brennweite $F_1$, $F_2$ und Brechungsindex $n_1(\lambda)$, $n_2(\lambda)$ angeordnet sind.

Weil bei dem abgebildeten Beispiel die Brennweite $F_1$ gleich der Brennweite $F_2$ und der Brechungsindex $n_1(\lambda)$ gleich dem Brechungsindex $n_2(\lambda)$ ist, sind die Abstände $D_1$ und $D_2$ ebenfalls gleich. Weil insbesondere auch die Scheitellinien der Zylinderlinsen 18 des zweiten Arrays 17 an den Scheitellinien der Zylinderlinsen 18 des dritten Arrays 19 anliegen, ergibt sich als Gesamtdicke D der Vorrichtung (siehe Fig. 7):

$$D = D_1 + D_2 = 2 \cdot F_1 \cdot n_1(\lambda) = 2 \cdot F_2 \cdot n_2(\lambda).$$

Jeweils vier in Z-Richtung hintereinander angeordnete Zylinderlinsen 18 auf dem ersten, dem zweiten, dem dritten und dem vierten Array 16, 17, 19, 20 stellen somit einen als Teleskop wirkenden Kanal dar. Die Vergrößerung dieser einzelnen Teleskope entspricht im abgebildeten Beispiel -1. Dabei dienen die mittleren Zylinderlinsen 18, die in dem zweiten und dem dritten Array 17, 19 angeordnet sind, als zusätzliche Feldlinsen, die eine Abbildung von Licht zulassen, das unter großen Winkeln zur Normalen auf die Vorrichtung auftrifft.

Fig. 7 zeigt die Abbildung von zwei punktförmigen Lichtverteilungen A, B. Dabei weist die Lichtverteilung A in Z-Richtung einen Abstand $L_A$ zu der Vorrichtung auf, wobei $L_A$ insbesondere den Abstand zwischen der Lichtverteilung A und der Ebene bezeichnet, in der die Scheitellinien der Zylinderlinsen 18 des ersten Arrays 16 liegen (siehe Fig. 7). Weiterhin weist entsprechend die Lichtverteilung B in Z-Richtung einen Abstand $L_B$ zu der Vorrichtung auf, wobei $L_B$ insbesondere den Abstand zwischen der Lichtverteilung B und der Ebene bezeichnet, in der die Scheitellinien der Zylinderlinsen 18 des vierten Arrays 20 liegen.

Zur Verdeutlichung des Abbildungsvorgangs sind von den Lichtverteilungen A, B ausgehende Lichtstrahlen $S_a$, $S_b$ und die an den Zylinderlinsen 18 gebrochenen Lichtstrahlen $S_{a'}$, $S_{b'}$ eingezeichnet. Die eingezeichneten Lichtstrahlen $S_a$, $S_b$, $S_{a'}$, $S_{b'}$ sind beispielhaft dargestellt und entsprechen idealisierten Lichtstrahlen der geometrischen Optik.

Die Abbildungen der Lichtverteilungen A, B sind in Fig. 7 mit den Bezugszeichen A', B' versehen. Diese Abbildungen A', B' sind genauso weit von der Vorrichtung entfernt wie die Lichtverteilungen A, B. Das bedeutet, dass die Abbildung A' zu der Ebene, in der die Scheitellinien der Zylinderlinsen 18 des zweiten und des dritten Arrays 17, 19 aneinander anliegen, einen Abstand von $L_A$ aufweist. Weiterhin weist die Abbildung B' zu der Ebene, in der die Scheitellinien der Zylinderlinsen 18 des zweiten und des dritten Arrays 17, 19 aneinander anliegen, einen Abstand von $L_B$ auf.

Es zeigt sich, dass die Abbildungen nicht punktförmig sind, sondern in X-Richtung, also in der Richtung, in der die Zylinderlinsen 18 nebeneinander angeordnet sind, zu Linien verbreitert sind. Die Breite $B_{A'}$, $B_{B'}$ der Abbildungen A', B' in X-Richtung ist jeweils abhängig von der Breite b der Zylinderlinsen 18, der Größe des Abstandes $L_A$, $L_B$ der Abbildungen A', B' zu der Vorrichtung und von der Wellenlänge $\lambda$ des Lichts der Lichtverteilungen A, B. Insbesondere gelten folgende Formeln:

$$B_{A'} = 2 \cdot \left(b + \frac{\lambda}{b} \cdot L_A\right) \qquad (1)$$

und

$$B_{B'} = 2 \cdot \left(b + \frac{\lambda}{b} \cdot L_B\right). \hspace{4cm} (2)$$

Bei einer Breite b der Zylinderlinsen 18, die groß gegenüber der Wellenlänge $\lambda$ des Lichts der Lichtverteilungen A, B ist, entspricht die Breite $B_{A'}$, $B_{B'}$ der Abbildungen A', B' in X-Richtung somit etwa dem Zweifachen der Breite b der Zylinderlinsen 18.

Bei der Abbildung punktförmiger Lichtverteilungen kann sich diese Verbreiterung der Abbildungen in X-Richtung störend auswirken. Bei in X-Richtungen vergleichsweise stark ausgedehnten Lichtverteilungen ist dies jedoch anders. Fig. 8 zeigt einen derartigen Fall.

Die Vorrichtung gemäß Fig. 8 unterscheidet sich von derjenigen gemäß Fig. 7 lediglich dadurch, dass die Substrate 12a, 12b in X-Richtung ausgedehnter sind, also eine größere Anzahl nebeneinander angeordneter Zylinderlinsen 18 aufweisen. Die Größe und Anzahl der Zylinderlinsen 18 sind nur beispielhaft und können durchaus von der Abbildung abweichen.

Fig. 8 zeigt eine linienförmige Lichtverteilung C in einer ersten Ebene, die in Z-Richtung einen Abstand $L_C$ von der Vorrichtung aufweist, wobei $L_C$ insbesondere den Abstand zwischen der Lichtverteilung C und der Ebene bezeichnet, in der die Scheitellinien der Zylinderlinsen 18 des zweiten und des dritten Arrays 17, 19 aneinander anliegen. Die Breite $B_C$ der Lichtverteilung C und die Größe des Abstands $L_C$ sind nur schematisch dargestellt und können durchaus von der Abbildung abweichende Werte oder Verhältnisse annehmen.

Beispielsweise kann die Breite $B_C$ der Lichtverteilung C in der X-Richtung 3 m betragen. Weiterhin kann der Abstand $L_C$ der Lichtverteilung C von der Vorrichtung in Z-Richtung 1 m betragen. Bei einer angenommenen einseitigen Divergenz (siehe Winkel $\beta$ in Fig. 8) von etwa 11 ° zwischen beispielhaften von der Lichtverteilung C ausgehenden Lichtstrahlen $S_C$ ergäbe sich bei ungehinderter Ausbreitung der Lichtverteilung C gemäß den Lichtstrahlen $S_{C''}$ nach einer Strecke von 2 m eine Breite $B_{C''}$ in X-Richtung von 3,8 m (siehe Fig. 8). Auch bei der Fig. 8 sind die eingezeichneten Lichtstrahlen $S_C$, $S_{C'}$, $S_{C''}$ beispielhaft dargestellt und entsprechen idealisierten Lichtstrahlen der geometrischen Optik.

Die Breite b der Zylinderlinsen 18 in X-Richtung soll 2 mm betragen. Die Anordnung einer derartigen Vorrichtung in einem Abstand $L_C$ von etwa 1 m hinter der Lichtverteilung C führt zu einer Abbildung C' in einer zweiten Ebene, die einen Abstand $L_C$ von etwa 1 m zu der Vorrichtung aufweist. Die an der Vorrichtung gebrochenen Lichtstrahlen $S_{C'}$ verdeutlichen diese Abbildung. Die Breite $B_{C'}$ der Abbildung C' in X-Richtung beträgt bei dem angenommenen Beispiel jedoch nur 3,004 m. Dies deshalb, weil gemäß der Formel (1) die zusätzliche Breite etwa dem Zweifachen der Breite b (= 2 mm) der Zylinderlinsen 18 entspricht.

Damit ergibt sich eine Verbreiterung der Abbildung C' gegenüber der ursprünglichen Lichtverteilung C im Bereich von etwa 0,1%. Eine derartige Verbreiterung wird in den allermeisten Anwendungsfällen vernachlässigbar sein. Um eine vergleichbar gute Abbildung mit anderen, aus dem Stand der Technik bekannten Vorrichtungen zu erzielen, müssten aufwendige Lichtleitertechniken verwendet werden.

**Patentansprüche**

1. Vorrichtung zur Beaufschlagung eines zumindest teilweise reflektierenden oder transparenten Bereichs eines in einem Arbeitsbereich (4) angeordneten Werkstücks mit Laserstrahlung (1), umfassend

   - eine Laserlichtquelle zur Erzeugung der Laserstrahlung (1);
   - Optikmittel zur Beeinflussung der Laserstrahlung (1) derart, dass sie in den Arbeitsbereich (4) fokussiert wird, wobei die Optikmittel mindestens einen Spiegel (6, 7, 8, 9) umfassen, der einen in dem Arbeitsbereich (4) reflektierten Teil der Laserstrahlung (1) oder einen durch den Arbeitsbereich (4) hindurchgetretenen Teil der Laserstrahlung (1) derart reflektieren kann, dass dieser Teil der Laserstrahlung (1) zumindest teilweise zu dem Arbeitsbereich (4) zurück geführt wird;

   **dadurch gekennzeichnet, dass** die Optikmittel mindestens ein Linsenarraymittel (12, 13, 14, 15) umfassen, das derart in der Vorrichtung angeordnet ist, dass der im Arbeitsbereich (4) reflektierte Teil der Laserstrahlung (1) oder der durch den Arbeitsbereich (4) hindurchgetretene Teil der Laserstrahlung (1) vor der Zurücküberführung in den Arbeitsbereich (4) durch das mindestens eine Linsenarraymittel (12, 13, 14, 15) hindurchtreten kann, wobei durch das mindestens eine Linsenarraymittel (12, 13, 14, 15) eine Verringerung der Rayleighlänge des Fokusbereichs des wieder in den Arbeitsbereich (4) zurück geführten Teils der Laserstrahlung (1) reduziert oder verhindert werden kann.

2. Vorrichtung nach Anspruch 1, **dadurch gekennzeichnet, dass** die Optikmittel mindestens eine Linse (3, 5) umfassen.

3. Vorrichtung nach Anspruch 2, **dadurch gekennzeichnet, dass** die mindestens eine Linse (3, 5) eine positive Brechkraft aufweist.

4. Vorrichtung nach einem der Ansprüche 2 oder 3, **dadurch gekennzeichnet, dass** die mindestens eine Linse (3, 5) zwischen dem Arbeitsbereich (4) und dem mindestens einen Spiegel (6, 7, 8, 9) angeordnet ist.

5. Vorrichtung nach einem der Ansprüche 1 bis 4, **dadurch gekennzeichnet, dass** mindestens ein erster Spiegel (6, 7) auf der von der Laserlichtquelle abgewandten Seite des Arbeitsbereichs (4) angeordnet ist, der einen durch den Arbeitsbereich (4) hindurchgetretenen Teil der Laserstrahlung (4) derart reflektieren kann, dass dieser Teil der Laserstrahlung (1) zumindest teilweise zu dem Arbeitsbereich (4) zurück geführt wird.

6. Vorrichtung nach Anspruch 5, **dadurch gekennzeichnet, dass** die Vorrichtung zusätzlich zu dem mindesten einen ersten Spiegel mindestens einen zweiten Spiegel (8, 9) auf der der Laserlichtquelle zugewandten Seite des Arbeitsbereichs (4) umfasst, der einen Teil des von dem ersten Spiegel (6, 7) reflektierten und zumindest teilweise durch den Arbeitsbereich (4) hindurchgetretenen Teils der Laserstrahlung (1) derart reflektieren kann, dass dieser Teil der Laserstrahlung (4) zumindest teilweise zu dem Arbeitsbereich (4) zurück geführt wird.

7. Vorrichtung nach einem der Ansprüche 1 bis 4, **dadurch gekennzeichnet, dass** der oder die Spiegel (8, 9) lediglich auf der der Laserlichtquelle zugewandten Seite des Arbeitsbereichs (4) angeordnet sind, wobei der oder die Spiegel (8, 9) einen in dem Arbeitsbereich (4) reflektierten Teil der Laserstrahlung (1) derart reflektieren kann oder können, dass dieser Teil der Laserstrahlung (1) zumindest teilweise zu dem Arbeitsbereich (4) zurück geführt wird.

8. Vorrichtung nach einem der Ansprüche 1 bis 7, **dadurch gekennzeichnet, dass** die Optikmittel auf einer oder jeder der Seiten des Arbeitsbereichs (4) mehr als einen Spiegel (6, 7, 8, 9) umfassen.

9. Vorrichtung nach Anspruch 8, **dadurch gekennzeichnet, dass** die mehreren auf der gleichen Seite des Arbeitsbereichs (4) angeordneten Spiegel (6, 7, 8, 9) zueinander geneigt sind.

10. Vorrichtung nach Anspruch 9, **dadurch gekennzeichnet, dass** die mehreren auf der gleichen Seite des Arbeitsbereichs (4) angeordneten Spiegel (6, 7, 8, 9) unter einem Winkel von 90°zueinander geneigt sind.

11. Vorrichtung nach einem der Ansprüche 1 bis 10, **dadurch gekennzeichnet, dass** der mindestens eine Spiegel (6, 7, 8, 9) gekrümmt ist, beispielsweise mit einem parabelförmigen oder einem elliptischen Querschnitt.

12. Vorrichtung nach einem der Ansprüche 1 bis 11, **dadurch gekennzeichnet, dass** der mindestens eine Spiegel (6, 7, 8, 9) eine äußere und/oder eine innere spiegelnde Oberfläche aufweist.

13. Vorrichtung nach einem der Ansprüche 1 bis 12, **dadurch gekennzeichnet, dass** die Vorrichtung mindestens einen polarisationsselektiven Strahlteiler (21) umfasst, von dem die Laserstrahlung (1d) in den Arbeitsbereich (4) reflektiert werden kann.

14. Vorrichtung nach Anspruch 13, **dadurch gekennzeichnet, dass** die Vorrichtung mindestens einen Polarisationsdreher (22) umfasst, der die Polarisationsrichtung der Laserstrahlung (1, 1e) vor und/oder nach dem Hindurchtritt durch den Strahlteiler (21) drehen kann.

15. Vorrichtung nach Anspruch 14, **dadurch gekennzeichnet, dass** der mindestens eine Polarisationsdreher (22) die Polarisationsrichtung der Laserstrahlung (1, 1e) um 90° drehen kann.

**Claims**

1. Device for applying a laser beam (1) on an at least partially reflecting or transparent region of a workpiece arranged in a working region (4), comprising

 - a laser light source for generating the laser beam (1);
 - optical means for influencing the laser beam (1) such that it is focused into the working region (4), wherein the optical means have at least one mirror (6, 7, 8, 9) which can reflect a part of the laser beam (1) reflected into the working region (4) or a part of the laser beam (1) penetrating through the working region (4) such that this part of the laser beam (1) is guided back at least partially to the working region (4);

**characterised in that** the optical means have a lens array means (12, 13, 14, 15) which is arranged in the device such that the part of the laser beam (1) reflected in the working region (4) or the part of the laser beam (1) penetrating through the working region (4) can penetrate through the at least one lens array means (12, 13, 14, 15) prior to being transferred back, wherein a reduction of the Rayleigh length of the focus region of the part of the laser beam (1) guided back into the working region (4) can be reduced or prevented by the at least one lens array means (12, 13, 14, 15).

2. Device according to claim 1, **characterised in that** the optical means have at least one lens (3, 5).

3. Device according to claim 2, **characterised in that** the at least one lens (3, 5) has a positive refractive power.

4. Device according to any one of claims 2 or 3, **characterised in that** the at least one lens (3, 5) is arranged between the working region (4) and the at least one mirror (6, 7, 8, 9).

5. Device according to any one of claims 1 to 4, **characterised in that** at least one first mirror (6, 7) is arranged on the side of the working region (4) facing away from the laser light source, said working region being capable of reflecting a part of the laser beam (4) penetrating through the working region (4) such that this part of the laser beam (1) is guided back at least partially to the working region (4).

6. Device according to claim 5, **characterised in that** the device, in addition to the at least one first mirror, has at least one second mirror (8, 9) on the side of the working region (4) facing the laser light source, said at least one second mirror (8, 9) being capable of reflecting a part of the part of the laser beam (1) reflected by the first mirror (6, 7) and penetrating at least partially through the working region (4) such that this part of the laser beam (1) is guided back at least partially to the working region (4).

7. Device according to any one of claims 1 to 4, **characterised in that** the mirror(s) (8, 9) are arranged only on the side of the working region (4) facing the laser light source, wherein the mirror(s) (8, 9) can reflect a part of the laser beam (1) reflected into the working region (4) such that this part of the laser beam (1) is guided back at least partially to the working region (4).

8. Device according to any one of claims 1 to 7, **characterised in that** the optical means have more than one mirror (6, 7, 8, 9) on one or each of the sides of the working region (4).

9. Device according to claim 8, **characterised in that** the plurality of mirrors (6, 7, 8, 9) arranged on the same side of the working region (4) are inclined to each other.

10. Device according to claim 9, **characterised in that** the plurality of mirrors (6, 7, 8, 9) arranged on the same side of the working region (4) are inclined to each other at an angle of 90°.

11. Device according to any one of claims 1 to 10, **characterised in that** the at least one mirror (6, 7, 8, 9) is curved, for example with a parabolic or an elliptical cross-section.

12. Device according to any one of claims 1 to 11, **characterised in that** the at least one mirror (6, 7, 8, 9) has an outer and/or an inner reflecting surface.

13. Device according to any one of claims 1 to 12, **characterised in that** the device has at least one polarisation selective beam splitter (21) from which the laser beam (1d) can be reflected into the working region (4).

14. Device according to claim 13, **characterised in that** the device has at least one polarisation rotator (22) which can rotate the polarisation direction of the laser beam (1, 1e) before and/or after penetrating through the beam splitter (21).

15. Device according to claim 14, **characterised in that** the at least one polarisation rotator (22) can rotate the polarisation direction of the laser beam (1, 1e) by 90°.

**Revendications**

1. Dispositif de soumission d'une zone au moins en partie réfléchissante ou transparente d'une pièce agencée dans une zone de travail (4) à l'action d'un faisceau laser (1), comprenant

   - une source de lumière laser pour générer le faisceau laser (1) ;
   - des moyens optiques pour influencer le faisceau laser (1) de telle sorte qu'il soit focalisé dans la zone de travail (4), dans lequel les moyens optiques comprennent au moins un miroir (6, 7, 8, 9), qui peut réfléchir une partie du faisceau laser (1) réfléchie dans la zone de travail (4) ou une partie du faisceau laser (1) traversant la zone de travail (4) de telle sorte que cette partie du faisceau laser (1) soit ramenée au moins en partie à la zone de travail (4) ;

   **caractérisé en ce que** les moyens optiques comprennent au moins un moyen de réseau de lentilles (12, 13, 14, 15), qui est agencé dans le dispositif de telle sorte que la partie du faisceau laser (1) réfléchie dans la zone de travail (4) ou la partie du faisceau laser (1) traversant la zone de travail (4) puisse traverser l'au moins un moyen de réseau de lentilles (12, 13, 14, 15) avant le retour dans la zone de travail (4), dans lequel une diminution de la longueur de Rayleigh du domaine de focalisation de la partie du faisceau laser (1) ramenée à la zone de travail (4) peut être réduite ou empêchée par l'au moins un moyen de réseau de lentilles (12, 13, 14, 15).

2. Dispositif selon la revendication 1, **caractérisé en ce que** les moyens optiques comprennent au moins une lentille (3, 5).

3. Dispositif selon la revendication 2, **caractérisé en ce que** l'au moins une lentille (3, 5) présente un pouvoir réfringent positif.

4. Dispositif selon l'une quelconque des revendications 2 ou 3, **caractérisé en ce que** l'au moins une lentille (3, 5) est agencée entre la zone de travail (4) et l'au moins un miroir (6, 7, 8, 9).

5. Dispositif selon l'une quelconque des revendications 1 à 4, **caractérisé en ce qu'**au moins un premier miroir (6, 7) est agencé sur le côté de la zone de travail (4) opposé à la source de lumière laser, qui peut réfléchir une partie du faisceau laser (4) traversant la zone de travail (4), de telle sorte que cette partie du faisceau laser (1) soit ramenée au moins en partie à la zone de travail (4).

6. Dispositif selon la revendication 5, **caractérisé en ce que** le dispositif comprend en plus de l'au moins un premier miroir, au moins un deuxième miroir (8, 9) sur le côté de la zone de travail (4) tourné vers la source de lumière laser, qui peut réfléchir une partie de la partie du faisceau laser (1) réfléchie par le premier miroir (6, 7) et traversant au moins en partie la zone de travail (4) de telle sorte que cette partie du faisceau laser (4) soit ramenée au moins en partie à la zone de travail (4).

7. Dispositif selon l'une quelconque des revendications 1 à 4, **caractérisé en ce que** le ou les miroir(s) (8, 9) sont agencés seulement sur le côté de la zone de travail (4) tourné vers la source de lumière laser, dans lequel le ou les miroir(s) (8, 9) peut ou peuvent réfléchir une partie du faisceau laser (1) réfléchie dans la zone de travail (4) de telle sorte que cette partie du faisceau laser (1) soit ramenée au moins en partie à la zone de travail (4).

8. Dispositif selon l'une quelconque des revendications 1 à 7, **caractérisé en ce que** les moyens optiques comprennent sur un ou chacun des côtés de la zone de travail (4) plus d'un miroir (6, 7, 8, 9).

9. Dispositif selon la revendication 8, **caractérisé en ce que** les plusieurs miroirs (6, 7, 8,9) agencés du même côté de la zone de travail (4) sont inclinés l'un par rapport à l'autre.

10. Dispositif selon la revendication 9, **caractérisé en ce que** les plusieurs miroirs (6, 7, 8, 9) agencés du même côté de la zone de travail (4) sont inclinés l'un par rapport à l'autre en formant un angle de 90°.

11. Dispositif selon l'une quelconque des revendications 1 à 10, **caractérisé en ce que** l'au moins un miroir (6, 7, 8, 9) est courbe, par exemple avec une section transversale en forme de parabole ou elliptique.

12. Dispositif selon l'une quelconque des revendications 1 à 11, **caractérisé en ce que** l'au moins un miroir (6, 7, 8, 9) présente une surface réfléchissante extérieure et/ou intérieure.

**13.** Dispositif selon l'une quelconque des revendications 1 à 12, **caractérisé en ce que** le dispositif comprend au moins un séparateur de faisceau (21) sélectif de polarisation, par lequel le faisceau laser (1d) peut être réfléchi dans la zone de travail (4).

**14.** Dispositif selon la revendication 13, **caractérisé en ce que** le dispositif comprend au moins un tourneur de polarisation (22), qui peut tourner la direction de polarisation du faisceau laser (1, 1e) avant et/ou après la traversée du séparateur de faisceau (21).

**15.** Dispositif selon la revendication 14, **caractérisé en ce que** l'au moins un tourneur de polarisation (22) peut tourner la direction de polarisation du faisceau laser (1, 1e) de 90°.

Fig. 1

Fig. 2

Fig. 3

Fig. 4

Fig. 5

Fig. 6

# Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040241922 A

- DE 19936230 A1

**In der Beschreibung aufgeführte Nicht-Patentliteratur**

- **MAX ; WOLF ; EMIL.** Principles of Optics. Cambridge University Press, 1999, 97 ff